# EUROPÄISCHE PATENTSCHRIFT

(11) **EP 1 716 322 B1**
(45) Veröffentlichungstag und Bekanntmachung des Hinweises auf die Patenterteilung: **18.07.2007**
(21) Anmeldenummer: 05716620.9
(22) Anmeldetag: 02.02.2005
(51) Int. Cl.: F01N 3/20, E03B 7/10, B01D 53/90, F15B 1/10

(54) **SPEICHER FÜR EIN ABGASNACHBEHANDLUNGSMEDIUM EINER ABGASNACHB EHANDLUNGSEINRICHTUNG FÜR FAHRZEUGE MIT DIESELVERBRENNUNGSMOTOREN**
RESERVOIR FOR AN EXHAUST AFTERTREATMENT MEDIUM OF AN EXHAUST AFTERTREATMENT DEVICE FOR VEHICLES HAVING DIESEL COMBUSTION ENGINES
ACCUMULATEUR POUR MILIEU DE TRAITEMENT SECONDAIRE DE GAZ D'E CHAPPEMENT POUR VEHICULES EQUIPES DE MOTEURS A COMBUSTION INTERNE DE TYPE DIESEL

(30) Priorität: 10.02.2004 DE 102004006333
(43) Veröffentlichungstag der Anmeldung: 02.11.2006
(73) Patentinhaber: Hydraulik-Ring GmbH, 97828 Marktheidenfeld (DE)
(72) Erfinder: MAISCH, Dieter, 72664 Kohlberg (DE); KLOTZ, Stefan, 72631 Aichtal-Grötzingen (DE); MEYER, Roland, 72622 Nürtingen (DE)
(86) Internationale Anmeldenummer: PCT/EP2005/050454
(87) Internationale Veröffentlichungsnummer: WO 2005/078249

(56) Entgegenhaltungen:
- EP-A- 1 236 499
- WO-A-03/085270
- DE-A1- 2 812 076
- US-A- 4 312 382
- US-B1- 6 474 961

## Beschreibung

Die Erfindung betrifft einen Speicher für ein Abgasnachbehandlungsmedium einer Abgasnachbehandlungseinrichtung für Fahrzeuge mit Dieselverbrennungsmotoren nach dem Oberbegriff des Anspruches 1.

Es sind Abgasnachbehandlungseinrichtungen bei Fahrzeugen mit Dieselmotoren bekannt, um die Abgase der Dieselmotoren mit dem Abgasnachbehandlungsmedium, vorzugsweise einer 32,5 %igen Harnstoff-Wasser-Lösung bzw. einem anderen stickoxidreduzierenden Additiv, zu behandeln, um die Stickoxide im Abgas zu reduzieren bzw. vollständig zu entfernen. Im Kreislaufsystem des Abgasnachbehandlungsmediums befindet sich ein Speicher, der mit Stickstoff befüllt ist Der Speicher dient zur Glättung der Druckschwingungen, die durch die Förderpumpe für das Abgasnachbehandlungsmedium entstehen sowie zur Einspeicherung von Flüssigkeitsvolumen, um die Pumpenlaufzeit sowie die Laufzeit des Antriebsmotors der Pumpe zu verringern. Die Aufnahmeräume für das Abgasnachbehandlungsmedium und den Stickstoff sind durch eine Membran voneinander getrennt. Aufgrund der Gaspermeabilität der Membran verliert der Speicher eines den Erfindern bisher bekannten Systems über seine Betriebsdauer Innendruck und muß darum in bestimmten Zeitintervallen gewartet bzw. nachgefüllt werden.

Aus der DE 100 52 077 A1 ist ein Vorratsbehälter bekannt, der auch als Tank bezeichnet werden kann. Der Vorratsbehälter nimmt das Medium für die Abgasnachbehandlung, vergleichbar mit einem Treibstofftank, auf und gibt es während seiner Fülldauer nach und nach an das Abgasnachbehandlungssystem ab. Das Abgasnachbehandlungssystem umfasst nach einer Ausgestaltung eine Pumpe, die die Flüssigkeit aus dem Vorratsbehälter bzw. Tank durch die Leitungen fordert.

EP 1 236 499 offenbart einen Speicher eines Abgasnachbehandlungsmediums mit einem durch eine Membranen vom Medienaufnahmeraum getrennten Druckspeicherraum.

Der Erfindung liegt die Aufgabe zugrunde, den gattungsgemäßen Speicher bzw. Zwischenspeicher so auszubilden, daß er über seine Betriebsdauer zuverlässig arbeitet.

Diese Aufgabe wird beim gattungsgemäßen Speicher erfindungsgemäß mit den kennzeichnenden Merkmalen des Anspruches 1 gelöst.

Aufgrund der erfindungsgemäßen Ausbildung wird der Speicher bei jedem Fahrzeugstart neu befüllt. Aus dem Bordnetz des Fahrzeuges wird die Druckluft entnommen und über den Anschluß dem Aufnahmeraum des Speichers zugeführt. Der erfindungsgemäße Speicher ist darum wartungsfrei, da bei jedem Motorstart automatisch der Speicher mit der Druckluft gefüllt wird. Der Speicher bzw. Zwischenspeicher eignet sich besonders gut für Medien, wie Flüssigkeiten, die z.B. auf Basis von Wasser als wässrige Lösung, in den Abgasstrang eingeleitet werden sollen. Daher wird an Stelle des Begriffs Medium auch der Begriff Flüssigkeit verwendet, ohne sich hiermit ausschließlich auf ein solches Medium beschränken zu wollen.

Weitere Merkmale der Erfindung ergeben sich aus den weiteren Ansprüchen, der Beschreibung und der Zeichnung.

Die beiden Kolben, die als Mediumkolben und Druckluftkolben bezeichnet werden können, sind lösbar miteinander verbunden. Die Lösbarkeit, z. B. durch das Lösen einer Schraube, ermöglicht das leichte Warten und Reparieren der Membraneinheit. Es hat sich in langfristigen Tests gezeigt, dass die Membran eher Schädigungen durch Alterung ausgesetzt ist, als die anderen Teile, die aus haltbareren Materialien, wie z. B. einem Kunststoff oder einem Metall, gefertigt sind. Darüber hinaus muss der Aufnahmeraum sicher und zuverlässig abgedichtet werden. Dies wird durch simples axiales Spannen der lösbaren Kolben, wodurch die dazwischen liegende Membran ihren Eigenschaften entsprechend abgedichtet eingespannt wird, erreicht Auf Grund der gesteigerten Leakagedichtheit trägt es zur erhöhten Pumpenlebensdauer bei.

Die beiden Kolben haben unterschiedlich große beaufschlagbare Kolbenflächen. Durch unterschiedlichen Kolbenflächen kann auf die Druckverhältnisse Rücksicht genommen werden. So bietet sich auch eine Anschlagsfläche des einen Kolbens gegenüber dem anderen Kolben. Die wiederum beim Verspannen der Membran hilfreich ist. Insbesondere kann die beaufschlagbare Kolbenfläche des Mediumkolbens größer sein als die beaufschlagbare Kolbenfläche des Druckluftkolbens.

Nach einem weiteren, nicht näher dargestellten Ausführungsbeispiel, haben die beiden Kolbenflächen im Endeffekt die gleichen Wirkflächen. In diesem Fall werden die Druckverhältnisse ausschließlich durch die Federn eingestellt.

Der Druckluftkolben steht unter Federkraft. Die Summe aus Federkraft am Hubende und durch die Druckluft erzeugte Kraft auf den Druckluftkolben ist größer als die vom Abgasnachbehandlungsmedium auf den Mediumkolben ausgeübte Kraft. Die vorliegende Erfindung bezieht sich auf einen Speicher, näher spezifiziert einem Zwischenspeicher, der bei jedem Motorstart automatisch mit der Druckluft gefüllt werden kann. Ein Tank kann ein Medium nur in eine Richtung liefern. Der Tank, der Vorratsbehälter, wird gefüllt und kann über seine Befülldauer nur das Medium abgeben. Dem gegenüber ist der Speicher so ausgebildet, dass er über seine Betriebsdauer zuverlässig arbeitet. Es bedeutet, dass der Speicher Druckschwankungen der Pumpe ausgleicht.

Nach einem Aspekt der Erfindung war beabsichtigt, die eingesetzte Feder möglichst klein zu gestalten. Wie aus den Figuren zu sehen ist, bildet die Feder einen Fortsatz.

Durch die geschickte Gestaltung des Speichers werden die Schwierigkeiten überkommen, entweder eine kleine Feder zu verwenden, die entsprechend steif ausgestaltet ist, oder einen entsprechend großen Federbauraum vorzusehen. Das entworfene System soll in den beengten Bereich eines Personenkraftwagens einbaubar sein. Hierbei wird eine Optimierung im Kubikmillimeterbereich gesucht. Daher verwirklicht die Erfindung die erfinderische Idee, mit Hilfe eines Mediendrucks, wie zum Beispiel dem Luftdruck und einer vorgespannten Feder, die nur für so geringe Drücke wie zum Beispiel 0,4 bar ausgelegt sein muss, einen Speicher zu schaffen, der Pumpenpulsationen abfangen kann. Erschwerend kommt hinzu, dass der Speicher einfriertauglich sein muss. Durch die raffinierte Verbindung der Speichermöglichkeit mit der Federvorspannung kann ein Bauteil geschaffen werden, dass die einfrierende Harnstoffwasserlösung vorgespannt aufnehmen kann. Somit ist der entworfene Kolbenspeicher aufgrund seines geschickten Designs mit Feder und Kolben und einem entsprechenden Druckluftanschluss mit Membran, die nicht wartungsanfällig ist, in der Lage, Pumpenpulsationen auszugleichen, wartungsarm zu sein, die Pumpenlaufzeiten auf ein Minimum zu begrenzen, klein zu bauen und einfriertauglich zu sein.

Versuche haben gezeigt, dass die Pumpe während eines Betriebszyklusses des Fahrzeuges nur während ca. 50 % der Betriebsdauer betrieben werden muss. Durch den Zwischenspeicher wird der Energieverbrauch für die Abgasnachbehandlung im Fahrzeug reduziert, denn die Pumpe wird nur zeitweilig als Verbraucher betrieben.

Nach einem weiteren Aspekt der Erfindung wird die Federkraft so eingestellt, dass der Arbeitsdruckbereich des Abgasnachbehandlungsmediums dem Hub des Mediumkolbens annähernd entspricht.

Der Mediumkolben ist in einem Aufnahmeraum untergebracht, der Teil des Gehäuses ist, also ein Gehäuseraum ist, dessen Durchmesser größer ist als der Außendurchmesser des im Gehäuseraum liegenden Teiles des Mediumkolbens. Zwischen der Wandung des Gehäuseraumes und dem Mediumkolben ist ein Ringraum gebildet, der im Speicherbetrieb mit der Abgasnachbehandlungsmediumsseite leitungsverbunden ist.

Der Mediumkolben weist wenigstens eine Bohrung auf, die in die Kolbenfläche und in die Mantelfläche im Bereich des Ringraumes mündet. Der Ringraum ist mit dem Aufnahmeraum für das Abgasnachbehandlungsmedium strömungsverbunden. Jedes Merkmal trägt dazu bei, dass der Speicher sehr kompakt gestaltet werden kann. Der Mediumkolben kann hierdurch mehrere Funktionen gleichzeitig wahrnehmen.

Eine weitere Massnahme, die Baueinheit des Speichers klein zu gestalten, besteht darin, den Anschluss für die Luft, den Luftanschluss, in einem Gehäusedeckel vorzusehen. Der Gehäusedeckel weist einen Ansatz auf, in den der Druckluftkolben ragt. Der Druckluftkolben wird von dem Ansatz umschlossen, der nur die Form des Durckluftkolbens peripher umschreibt. Weiterhin ist im Ansatz wenigstens eine Druckfeder untergebracht.

Durch die Federwahl und die Anordnung der Feder kann die Membran des Zwischenspeichers auf den Betriebsdruck vorgespannt werden. Hierbei kann die Druckfeder wenigstens teilweise in den Druckluftkolben ragen. Es stellt eine weitere Massnahme dar, bauraum-optimaler den Speicher aufzubauen. Somit ist der Innendurchmesser des Ansatzes größer als der Außendurchmesser des im Ansatz befindlichen Teils des Druckluftkolbens.

An den Anschluss, der als Luftanschluss gilt, ist ein Druckminderventil anschliessbar. Der Betriebsdruck des Luftsystems des Kraftfahrzeuges, wie zum Beispiel die Druckluftbremsen, werden mit einem Druck oberhalb des Betriebsdrucks der Abgasnachbehandlungseinheit betrieben. Mittels des Druckminderventils kann von einer Druckluftquelle stammend die gleiche Luft sowohl für das Bremssystem des Kraftfahrzeuges als auch für das Abgasnachbehandlungssystem verwendet werden. In diesem Fall kann das Druckminderventil als Teil der Abgasnachbehandlungseinrichtung vorliegen, es ist dann also ein Teil der Abgasnachbehandlungseinrichtung, unabhängig von dem Kraftfahrzeugbremssystem.

Die Erfindung wird anhand eines in der Zeichnung dargestellten Ausführungsbeispieles näher erläutert. Es zeigen
- Fig. 1: im Axialschnitt einen erfindungsgemäßen Speicher,
- Fig. 2: in einer Darstellung entsprechend Fig. 1 den erfindungsgemäßen Speicher in Ruhestellung,
- Fig. 3: in einer Darstellung entsprechend Fig. 1 den erfindungsgemäßen Speicher in Arbeitsstellung, und
- Fig. 4: ein Druck-Kraft-Wegediagramm.

Der Speicher wird bei Abgasnachbehandlungseinrichtungen für Dieselmotoren eingesetzt. Mit solchen Einrichtungen werden die Abgase der Dieselmotoren mit einem Medium, vorzugsweise einer 32,5 %-igen Harnstoff-Wasser-Lösung, behandelt, um die Stickoxide im Abgas zu reduzieren bzw. vollständig zu entfernen. Zur Förderung dieses Abgasnachbehandlungsmediums wird eine Pumpe verwendet, die das Medium aus einem Vorratsbehälter, der auch als Tank zu bezeichnen ist, fördert. Um Druckschwingungen, die durch die Pumpe entstehen, zu glätten, wird ein Speicher eingesetzt. Der Speicher dient auch zur Einspeicherung von Flüssigkeitsvolumen, um die Pumpenlaufzeit sowie die Laufzeit des Pumpenantriebsmotors zu reduzieren. Hierbei ist der Speicher so gestaltet, dass er mit möglichst wenigen, wartungsarmen Teilen auskommt. Gleichzeitig verursacht der Zwischenspeicher geringe Druckverluste im Luftbordnetz des Kraftfahrzeuges.

Der Speicher hat ein Gehäuse 1, das mit einem Aufnahmeraum 2 für einen Flüssigkeitskolben 3 versehen ist. Sein Außendurchmesser ist geringfügig kleiner als der Durchmesser des Aufnahmeraumes 2. Der Flüssigkeitskolben 3 ist außenseitig mit einer Ringnut 4 versehen, in der ein Gleitring 5 untergebracht ist. Alternativ kann der Ring 5 auch ein Kolbenring sein. Mit ihm liegt der Flüssigkeitskolben 3 dichtend bzw. gleitend an der Innenwand 6 des Aufnahmeraumes 2 an. Der Flüssigkeitskolben 3 ist stirnseitig mit einem zentralen Ansatz 7 versehen, der in eine stirnseitige Vertiefung 8 eines Luftkolbens 9 eingreift. Er ist als Hohlkolben ausgebildet und hat einen Aufnahmeraum 10, in dem wenigstens eine Druckfeder 11 untergebracht ist Sie stützt sich mit einem Ende an einem den Aufnahmeraum 10 in Richtung auf den Flüssigkeitskolben 3 schließenden Boden 12 ab. Durch den Boden 12 wird eine Schraube 13 in eine stirnseitige Gewindebohrung 14 im Ansatz 7 des Flüssigkeitskolbens 3 geschraubt. Auf diese Weise werden die beiden Kolben 3 und 9 miteinander verbunden.

Zwischen dem Flüssigkeitskolben 3 und dem Luftkolben 9 wird ein verdickter Rand 15 einer Speichermembran 16 eingespannt. Der Flüssigkeitskolben 3 und der Luftkolben 9 sind jeweils mit einer umlaufenden Vertiefung 17, 18 versehen, die im Querschnitt jeweils teilkreisförmig ausgebildet ist. Nach einer Ausführungsform können die beiden Vertiefungen 17, 18 ineinander übergehend sein, so dass mit den Bezugszeichen zwei unterschiedliche Abschnitte der gleichen Vertiefung beschrieben werden. Die beiden außenseitigen Vertiefungen 17, 18 begrenzen einen Aufnahmeraum für den wulstartigen Rand 15 der Speichermembran 16. Die Vertiefungen 17, 18 und der Rand 15 der Speichermembran 16 sind so aufeinander abgestimmt, daß beim Zusammenschrauben von Flüssigkeitskolben 3 und Luftkolben 9 der wulstartige Rand 15 der Speichermembran 16 in den Vertiefungen 17, 18 eingespannt wird. Auf diese Weise ist die Speichermembran 16 zuverlässig an den beiden Kolben 3, 9 in dichtender Weise gehalten.

Der Aufnahmeraum 2 mündet in eine stirnseitige Vertiefung 19 des Gehäuses 1. Sie hat einen im Querschnitt konkav gekrümmten Boden 20, der sich vom Aufnahmeraum 2 bis zur Stirnseite 21 des Gehäuses 1 erstreckt. In der Vertiefung 19 liegt die Speichermembran 16, die von den beiden Kolben 3, 9 zentral durchsetzt wird.

Auf die Stirnseite 21 des Gehäuses 1 wird ein Gehäusedeckel 22 mit Schrauben 23 aufgeschraubt. Die Speichermembran 16 hat einen äußeren wulstartigen Rand 24, der in der Einbaulage in eine Vertiefung 25 in der Gehäusestirnseite 21 sowie in eine Vertiefung 26 in der Stirnseite 27 des Gehäusedeckels 22 eingreift. Beim Zusammenschrauben von Gehäuse 1 und Gehäusedeckel 22 wird dieser äußere Rand 24 in den Vertiefungen 25, 26 eingespannt. Die Schrauben 23 liegen im Bereich zwischen dem Membranrand 24 und der Außenseite des Gehäuses 1 bzw. des Gehäusedeckels 22. Vorteilhaft sind die Schrauben 23 über den Umfang des Gehäuses 1 verteilt angeordnet.

Der Gehäusedeckel 22 hat einen napfförmigen zentralen Ansatz 28, der durch einen Boden 29 an seinem vom Gehäuse 1 abgewandten Ende geschlossen ist. Vom Boden 29 steht zentral ein Ansatz 30 ab, der zur Zentrierung der Druckfeder 11 dient. Der Luftkolben 9 liegt über den größten Teil seiner Länge im Ansatz 28. Der Außendurchmesser des Luftkolbens 9 innerhalb des Ansatzes 28 ist geringfügig kleiner als der Innendurchmesser dieses Ansatzes. Er weist an seiner Innenwand 31 eine Ringnut 32 für einen Gleitring 33 auf, die gleitend an der Außenseite 34 des Luftkolbens 9 anliegt. Er ragt über den Ansatz 28 des Gehäusedeckels 22 in die gehäuseseitige Vertiefung 19. In diesem Bereich weist der Luftkolben 9 einen radial nach außen gerichteten Flansch 35 auf, der stirnseitig die Vertiefung 18 zur Aufnahme des inneren wulstartigen Randes 15 der Speichermembran 16 aufweist.

Die Druckfeder 11 wird durch den Kopf der Schraube 13 an ihrem gehäuseseitigen Ende zentriert.

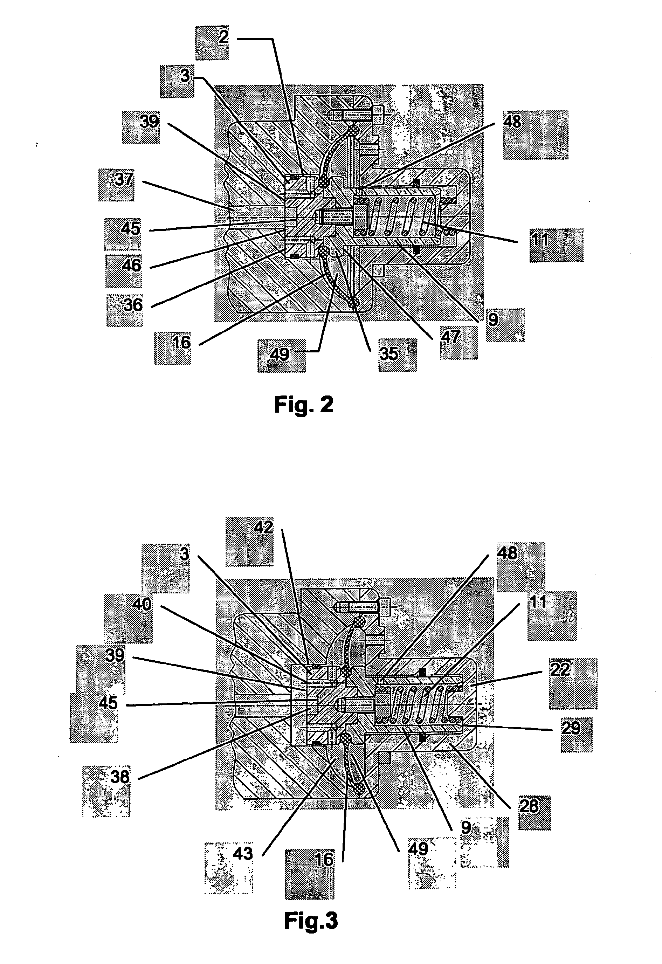

Befindet sich der Speicher in Ruhestellung (Fig. 2), liegt der Flüssigkeitskolben 3 am Boden 36 des Aufnahmeraumes 2 an. In den Aufnahmeraum 2 mündet ein als Bohrung ausgebildeter Flüssigkeitsanschluß 37. Der Flüssigkeitskolben 3 ist an seiner diesem Flüssigkeitsanschluß 37 zugewandten Stirnseite mit einer zentralen Vertiefung 38 versehen, die im Ausführungsbeispiel kleineren Durchmesser als der Flüssigkeitsanschluß 37 hat und deren Achse mit der Achse des Flüssigkeitsanschlusses 37 zusammenfällt. Die Vertiefung 38 befindet sich in einer ebenen Stirnseite 39 des Flüssigkeitskolben 3, die als Kolbenfläche dient und in noch zu beschreibender Weise vom Abgasnachbehandlungsmedium beaufschlagt wird. In die Stirnseite 39 mündet mindestens eine Bohrung 40, die abgewinkelt verläuft und in die äußere Mantelfläche 41 des Flüssigkeitskolbens 3 im Bereich zwischen dem Gleitring 5 und dem Rand 15 der Speichermembran 16 mündet. Da der Außendurchmesser des Flüssigkeitskolbens 3 kleiner ist als der Durchmesser des Aufnahmeraumes 2, wird zwischen dessen Innenwand 6 und der Mantelfläche 41 im Bereich zwischen dem Gleitring 5 und dem Membranrand 15 ein Ringraum 42 gebildet, der mit einem im Axialschnitt sichelförmigen Speicherraum 43 strömungsverbunden ist. Er wird zwischen der Speichermembran 16 und dem Boden 20 der Vertiefung 19 gebildet.

Der Gehäusedeckel 22 ist mit wenigstens einem Luftanschluß 44 in Form einer Bohrung versehen, der in die Vertiefung 19 auf der vom Speicherraum 43 abgewandten Seite der Membran mündet.

In der Ausgangs- bzw. Ruhelage des Speichers liegt der Flüssigkeitskolben 3 auf dem Boden 36 des Aufnahmeraumes 2 auf (Fig. 2). In diese Stellung wird der Flüssigkeitskolben 3 durch die Speichermembran 16 und die Druckfeder 11 belastet. Auf der Luftseite herrscht regelmäßig ein höherer Druck als auf der Flüssigkeitsseite. Der Luftdruck p_{abs} wirkt über den Luftanschluß 44 auf die Speichermembran 16 derart; daß diese in Richtung auf den Boden 20 der Vertiefung 19 belastet ist. Der Speicherraum 43 hat in dieser Ruhestellung sein kleinstes Volumen. Der Luftdruck p_{abs} liegt beispielhaft bei 3,0 ± 0,2 bar. Der Flüssigkeitsdruck p_{flü} liegt bei Abgasnachbehandlungseinrichtungen beispielsweise bei etwa 3,5 bar. Wenigstens eine Bohrung 48 im Luftkolben 9 verbindet in dieser Ruhelage den Aufnahmeraum 49 mit dem Innenraum des Luftkolbens 9.

In der Funktionsstellung gemäß Fig. 3 wirkt über den Flüssigkeitsanschluß 37 die Flüssigkeit auf den Boden 45 der Vertiefung 38 sowie auf die in den Querschnitt des Flüssigkeitsanschlusses 37 ragende Ringfläche 46 der Kolbenstirnseite 39.

Der Druck auf der Luftseite wirkt über den Luftanschluß 44 auf die ringförmige Unterseite 47 des Flansches 35 des Luftkolbens 9. Er wird zudem durch die Druckfeder 11 belastet. Die somit durch den Luftdruck und die Federkraft auf den Luftkolben 9 wirkende Kraft ist größer als die durch die Flüssigkeit hervorgerufene, auf den Flüssigkeitskolben 3 entgegengerichtete Kraft. Dadurch wird der Flüssigkeitskolben 3, solange sich der Speicher in Ruhestellung befindet, zuverlässig gegen den Boden 36 des Aufnahmeraumes 2 gedrückt. In der Ruhestellung wird, wenn kein Kräftegleichgewicht vorliegt, der Kolben wegen der Federkraft in die eine Richtung gedrückt. Hierdurch wird auf beiden Seiten der Membran der Betriebsdruck abgebaut. Die Volumenaufnahmefähigkeit geschieht durch eine Verschiebung der Kolben entgegen der Federkraft.

Der Luftanschluß 44 ist an ein Druckminderventil angeschlossen, so daß für den Speicher ein konstanter Luftdruck jederzeit zur Verfügung steht. Als Luft wird bei Kraft- oder Nutzfahrzeugen die Druckluft aus dem Bordnetz verwendet Der Speicher stellt keinen zusätzlichen Verbraucher dar, sondern wird nur einmal bei Start des Verbrennungsmotors befüllt.

Die Kraft der Druckfeder 11 ist so gewählt, daß der Arbeitsdruckbereich auf der Flüssigkeitsseite dem kompletten Hub des Speichers entspricht. Dadurch kann der ganze Weg des Speichers und somit das maximale Volumen ausgenutzt werden. Aufgrund der unterschiedlich großen Drücke auf der Druckluft-und auf der Flüssigkeitsseite entsteht ein Kraftgefälle, das dazu ausgenutzt wird, daß die auf der Luftkolbenseite eingesetzt Druckfeder 11 im Arbeitsdruckbereich der Flüssigkeitsseite arbeitet. Dieser Arbeitsdruckbereich Δp liegt beispielhaft bei 0,4 bar.

Wenn der Druck auf der Flüssigkeitsseite größer wird als der Gesamtdruck auf der Luftseite, wird der Flüssigkeitskolben 3 vom Boden 36 des Aufnahmeraumes 2 abgehoben (Fig. 3). Die über den Flüssigkeitsanschluß 37 zugeführte Flüssigkeit kann dann die gesamte Stirnseite 39 des Flüssigkeitskolbens 3 zuzüglich dem Boden 45 der Vertiefung 38 beaufschlagen. Da diese flüssigkeitsbeaufschlagte Kolbenfläche größer ist als die druckluftseitig beaufschlagte Fläche des Luftkolbens 9, wird die Einheit aus Flüssigkeitskolben 3 und Luftkolben 9 gegen die Kraft der Druckfeder 11 zurückgeschoben. Über die Bohrungen 40 gelangt das zu speichernde Medium in den Ringraum 42 und von dort in den Speicherraum 43. Die Speichermembran 16 wird in Richtung auf die Luftseite elastisch verformt, wodurch in Verbindung mit dem Verschieben des Flüssigkeitskolbens 3 das Volumen des Speicherraumes 43 vergrößert wird. Das im Speicherraum 43 befindliche Medium wird durch die Speichermembran 16, den Luftdruck und die Federkraft im Gleichgewicht oder unter Vorspannung gehalten. Aufgrund der beschriebenen Auslegung der Druckfeder 11 wird der Flüssigkeitskolben 3 maximal verschoben. Der maximale Hubweg ist dann erreicht, wenn der Luftkolben 3 am Boden 29 des Ansatzes 28 des Gehäusedeckels 22 an der Innenseite des Gehäusedeckels 22 zur Anlage kommt (Fig. 3). Die Bohrung 48 befindet sich innerhalb des Ansatzes 28, so daß der Innenraum des Luftkolbens 9 vom Aufnahmeraum 49 verbunden bleibt.

Fig. 4 zeigt die Gegenüberstellung eines Druck-Kraft-Wegverhaltens eines erfindungsgemäßen Zwischenspeicher (x) gegenüber der Charakteristik eines Zwischenspeichers, der ausschließlich mit einem federvorgespannten Kolben (y), der einen identischen Federeinbauraum hat, aufgebaut ist. Auf der X-Achse des Diagramms ist der Weg, angedeutet durch den Buchstaben d, wiedergegeben An seiner maximalen Auslenkung, dem maximalen Hub H, ist der Druck auf der Y-Achse, die mit P bezeichnet ist, des Diagramms abzulesen, der durch C wiedergegeben ist. Zwischen den beiden Druckpunkten B, dem Leerlaufdruckpunkt, und C, der maximale Speichergesamtdruck, arbeitet der Kolben im Speicherbetrieb. Die Kennlinie mit der Bezeichnung Y zeigt den Verlauf eines ausschließlich durch eine Feder vorgespannten Kolbens. Damit die Feder nach y in den gleichen Bauraum passt, hat sie eine steilere Kennlinie, was nicht erwünscht ist. Auf der anderen Seite zeigt die Kennlinie mit der Bezeichnung x den Wege-Druckverlauf eines Kolbens, der bis zu einem Druck A, wie zum Beispiel 2,6 bar, durch Luft vorgedrückt wird, und die Feder den zusätzlichen Hub zwischen den Punkten A und C herstellen soll. Beispielhaft kann der Punkt A mit 2,6 bar angenommen werden, der Punkt B mit 3 bar und der Punkt C mit 3,4 bar. Damit kann dann der gewählte Druckhub der Feder 0,4 bar Pumpenpulsation puffern und ausgleichen.

Da der Speicher über den Druckluftanschluß 44 an das Druckluftbordnetz des Fahrzeuges angeschlossen ist, wird bei jedem Motorstart sichergestellt, daß der vorgesehene Speicherraum vollständig mit Druckluft gefüllt wird. Aufgrund der beschriebenen Ausbildung des Speichers kann während des Betriebes des Verbrennungsmotors die Flüssigkeit im Speicherraum 43 bei Bedarf zwischengespeichert werden. Außerdem kann der Speicherraum 43 dazu genutzt werden, das bei einem Einfrieren des Abgasnachbehandlungsmediums bei tiefen Temperaturen auftretende Zusatzvolumen aufzunehmen. Hierbei wird der Flüssigkeitskolben 3 in Richtung auf die Lage gemäß Fig. 3 verschoben, so daß das beim Gefrieren auftretende Zusatzvolumen nicht zu einer Beschädigung der Abgasnachbehandlungseinrichtung führt.

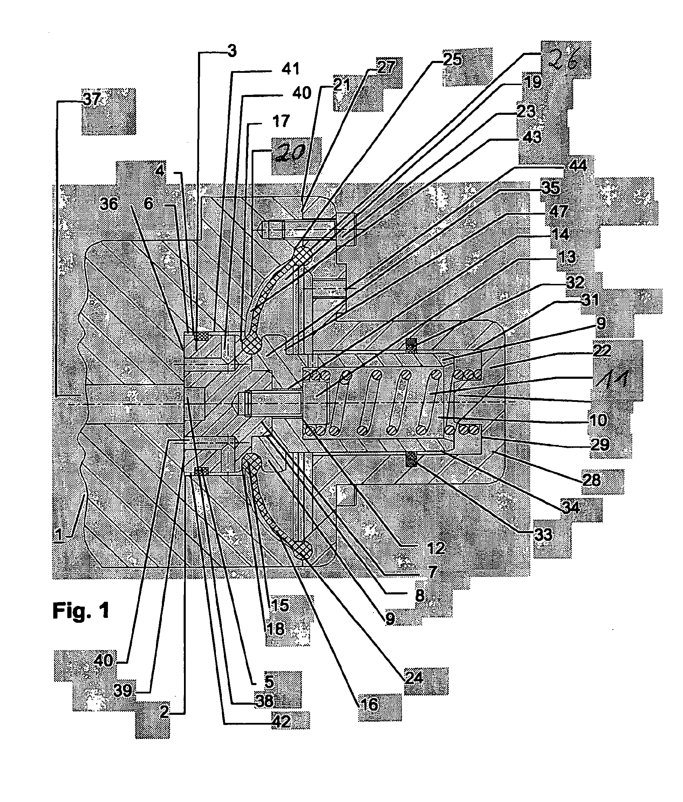

Im Boden 36 der Figuren 1 bis 3 befinden sich versenkte, radial von der Mitte weglaufende Überstromkanäle, die in den Schnitten nicht näher dargestellt worden sind. Die nicht dargestellten Kanäle sorgen für einen Strömungsausgleich des Mediums, selbst wenn der Kolben 3 gegen den Boden 36 anliegen sollte. Dadurch kann in der Anschlagsposition der Druck wieder aufgebaut werden und bei einem Druckabbau vollständig abgebaut werden.

### Bezugszeichenliste:

| Bezugszeichen | Bezeichnung |
|---|---|
| 1 | Gehäuse |
| 2 | Gehäuseraum als Aufnahmeraum |
| 3 | Mediumkolben |
| 4 | Ringnut |
| 5 | Gleitring |
| 6 | Wand, insbesondere Innenwand |
| 7 | Zentraler Ansatz |
| 8 | Stirnseitige Vertiefung |
| 9 | Luftkolben |
| 10 | Aufnahmeraum |
| 11 | Druckfeder |
| 12 | Boden |
| 13 | Schraube |
| 14 | Stirnseitige Gewindebohrung |
| 15 | Rand |
| 16 | Membran |
| 17 | Vertiefung |
| 18 | Vertiefung |
| 19 | Vertiefung |
| 20 | Boden |
| 21 | Stirnseite |
| 22 | Gehäusedeckel |
| 23 | Schrauben |
| 24 | Rand |
| 25 | Vertiefung |
| 26 | Vertiefung |
| 27 | Stirnseite |
| 28 | Ansatz |
| 29 | Boden |
| 30 | Ansatz |
| 31 | Innenwand |
| 32 | Ringnut |
| 33 | Gleitdichtung |
| 34 | Außenseite |
| 35 | Flansch |
| 36 | Boden |
| 37 | Flüssigkeitsanschluss |
| 38 | Zentrale Vertiefung |
| 39 | Stirnseite |
| 40 | Bohrung |
| 41 | Mantelfläche |
| 42 | Ringraum |
| 43 | Aufnahmeraum als Speicherraum |
| 44 | Anschluß, insbesondere Luftanschluß |
| 45 | Kolbenfläche als Boden |
| 46 | Kolbenfläche als Ringfläche |
| 47 | Kolbenfläche als Unterseite |
| 48 | Bohrung |
| 49 | Aufnahmeraum |

## Patentansprüche

1. Speicher eines Abgasnachbehandlungsmediums einer Abgasnachbehandlungseinrichtung für Fahrzeuge mit Dieselverbrennungsmotoren, mit einem Aufnahmeraum (2) für das Abgasnachbehandlungsmedium, der durch eine Membran (16) von einem Aufnahmeraum (49), in den mindestens ein Anschluss (44) mündet, für ein gasförmiges Medium, das das Abgasnachbehandlungsmedium unter Druck setzt, getrennt ist,
**dadurch gekennzeichnet, daß**
der Anschluss (44) an das Druckluft-Bordnetz des Fahrzeuges anschliessbar ist,
wobei die Membran (16) zwischen einem Mediumkolben (3) und einem Druckluftkolben (9) eingespannt ist,
und der Speicher so gestaltet ist, dass der Mediumkolben (3) vom einem Boden (36) des Aufnahmeraumes (2) für das Abgasnachbehandlungsmedium abgehoben wird, wenn der Druck auf der Abgasnachbehandlungsmediumseite größer wird als ein Gesamtdruck für das gasförmige Medium.

2. Speicher nach Anspruch 1,
**dadurch gekennzeichnet, daß** die beiden Kolben (3, 9) lösbar miteinander verbunden sind.

3. Speicher nach Anspruch 1 oder 2,
**dadurch gekennzeichnet, daß** die beiden Kolben (3,9) unterschiedlich große beaufschlagbare Kolbenflächen (39, 45, 46; 47) haben, insbesondere die beaufschlagbare Kolbenfläche (39, 45, 46) des Mediumkolbens (3) größer ist als die beaufschlagbare Kolbenfläche (47) des Druckluftkolbens (9).

4. Speicher nach einem der Ansprüche 2 bis 3,
**dadurch gekennzeichnet, daß** der Druckluftkolben (9) unter Federkraft steht.

5. Speicher nach Anspruch 4,
**dadurch gekennzeichnet, daß** die Summe aus Federkraft am Hubende und durch die Druckluft erzeugte Kraft auf den Druckluftkolben (9) größer ist als die vom Abgasnachbehandlungsmedium auf den Mediumkolben (3) ausgeübte Kraft, insbesondere die Federkraft so eingestellt ist, daß der Arbeitsdruckbereich des Abgasnachbehandlungsmediums dem Hub des Mediumkolbens (3) annähernd entspricht.

6. Speicher nach einem der Ansprüche 2 bis 5,
**dadurch gekennzeichnet, daß** der Mediumkolben (3) in dem Aufnahmeraum (2) für das Abgasnachbehandlungsmedium untergebracht ist, der ein Gehäuseraum ist, dessen Durchmesser größer ist als der Außendurchmesser des im Gehäuseraum liegenden Teiles des Mediumkolbens (3) und vorzugsweise zwischen der Wandung (6) des Gehäuseraumes und dem Mediumkolben (3) ein Ringraum (42) gebildet ist, der im Speicherbetrieb mit der Abgasnachbehandlungsmediumsseite leitungsverbunden ist.

7. Speicher nach Anspruch 6,
**dadurch gekennzeichnet, daß** der Mediumkolben (3) wenigstens eine Bohrung (40) aufweist, die in die Kolbenfläche (39, 45, 46) und in die Mantelfläche (41) im Bereich des Ringraumes (42) mündet.

8. Speicher nach Anspruch 6 oder 7,
**dadurch gekennzeichnet, daß** der Ringraum (42) mit dem Aufnahmeraum (43) für das Abgasnachbehandlungsmedium strömungsverbunden ist.

9. Speicher nach einem der Ansprüche 1 bis 8,
**dadurch gekennzeichnet, daß** der Anschluß (44) in einem Gehäusedeckel (22) vorgesehen ist.

10. Speicher nach Anspruch 9,
**dadurch gekennzeichnet, daß** der Gehäusedeckel (22) einen Ansatz (28) aufweist, in den der Druckluftkolben (9) ragt und insbesondere der Ansatz (28) so gestaltet ist, dass im Ansatz (28) wenigstens eine Druckfeder (11) untergebracht ist, die wenigstens teilweise in den Druckluftkolben (9) ragt.

11. Speicher nach Anspruch 10,
**dadurch gekennzeichnet, daß** der Innendurchmesser des Ansatzes (28) größer ist als der Außendurchmesser des im Ansatz (28) befindlichen Teils des Druckluftkolbens (9).

12. Speicher nach einem der Ansprüche 1 bis 11,
**dadurch gekennzeichnet, daß** der Anschluß (44) an ein Druckminderventil angeschlossen ist, das als Teil der Abgasnachbehandlungseinrichtung gilt.

## Claims

1. A reservoir of an exhaust gas post-treatment medium of an exhaust gas post-treatment device for vehicles having diesel engines, having a receiving chamber (2) for the exhaust gas post-treatment medium, this chamber (2) being separated by a diaphragm (16) from a receiving chamber (49) into which at least one connection piece (44) opens, this chamber (49) being for a gaseous medium which pressurises the exhaust gas post-treatment medium,
**characterised in that**
the connection piece (44) may be connected to the compressed air onboard system of the vehicle, the diaphragm (16) being clamped between a medium piston (3) and a compressed air piston (9),
and the reservoir being shaped such that the medium piston (3) is lifted away from a base (36) of the receiving chamber (2) for the exhaust gas post-treatment medium when the pressure on the exhaust gas post-treatment medium side becomes greater than an overall pressure level for the gaseous medium.

2. A reservoir according to Claim 1, **characterised in that** the two pistons (3, 9) are detachably connected to one another.

3. A reservoir according to Claim 1 or 2, **characterised in that** the two pistons (3, 9) have loadable piston faces (39, 45, 46; 47) of different sizes, in particular the loadable piston face (39, 45, 46) of the medium piston (3) being larger than the loadable piston face (47) of the compressed air piston (9).

4. A reservoir according to either of Claims 2 or 3, **characterised in that** the compressed air piston (9) is under spring force.

5. A reservoir according to Claim 4, **characterised in that** the sum of the spring force at the stroke end and the force on the compressed air piston (9), produced by the compressed air, is greater than the force exerted on the medium piston (3) by the exhaust gas post-treatment medium, with the spring force in particular being adjusted such that the working pressure range of the exhaust gas post-treatment medium corresponds approximately to the stroke of the medium piston (3).

6. A reservoir according to one of Claims 2 to 5, **characterised in that** the medium piston (3) is accommodated in the receiving chamber (2) for the exhaust gas post-treatment medium, this chamber (2) being a housing chamber whereof the diameter is larger than the external diameter of that part of the medium piston (3) lying in the housing chamber and preferably forming, between the wall (6) of the housing chamber and the medium piston (3), an annular chamber (42) which is in connection, through a line, with the exhaust gas post-treatment medium side during operation of the reservoir.

7. A reservoir according to Claim 6, **characterised in that** the medium piston (3) has at least one bore (40) which opens into the piston face (39, 45, 46) and into the outside surface (41) in the region of the annular chamber (42).

8. A reservoir according to Claim 6 or 7, **characterised in that** the annular chamber (42) is in flow connection with the receiving chamber (43) for the exhaust gas post-treatment medium.

9. A reservoir according to one of Claims 1 to 8, **characterised in that** the connection piece (44) is provided in a housing cover (22).

10. A reservoir according to Claim 9, **characterised in that** the housing cover (22) has an attached piece (28), into which the compressed air piston (9) projects, and in particular the attached piece (28) is shaped such that at least one pressure spring (11) is accommodated in the attached piece (22) and projects at least partly into the compressed air piston (9).

11. A reservoir according to Claim 10, **characterised in that** the internal diameter of the attached piece (28) is larger than the external diameter of that part of the compressed air piston (9) located inside the attached piece (28).

12. A reservoir according to one of Claims 1 to 11, **characterised in that** the connection piece (44) is connected to a pressure relief valve which is part of the exhaust gas post-treatment device.

## Revendications

1. Accumulateur de milieu de traitement secondaire de gaz d'échappement de dispositif de traitement secondaire de gaz d'échappement pour véhicules équipés de moteurs à combustion interne de type diesel, avec un espace récepteur (2) pour le milieu de traitement secondaire de gaz d'échappement qui est séparé d'un espace récepteur (49) par une membrane (16), au moins un raccord (44) conçu pour un milieu gazeux mettant sous pression le milieu de traitement secondaire de gaz d'échappement débouchant dans ledit espace récepteur,
**caractérisé en ce que**
le raccord (44) peut être raccordé au niveau du réseau de bord d'air comprimé du véhicule, la membrane (16) étant tendue entre un piston à milieu (3) et un piston à air comprimé (9),
et l'accumulateur étant configuré de manière à ce que le piston à milieu (3) soit soulevé depuis le fond (36) de l'espace récepteur (2) de milieu de traitement secondaire de gaz d'échappement lorsque la pression s'exerçant sur le côté du milieu de traitement secondaire de gaz d'échappement est supérieure à la pression générale du milieu gazeux.

2. Accumulateur selon la revendication 1,
**caractérisé en ce que** les deux pistons (3, 9) sont reliés entre eux de façon amovible.

3. Accumulateur selon la revendication 1 ou 2,
**caractérisé en ce que** les deux pistons (3, 9) ont des surfaces de piston (39, 45, 46 ; 47) chargeables de tailles différentes, la surface de piston (39, 45, 46) chargeable du piston à milieu (3) étant notamment plus grande que la surface de piston (47) chargeable du piston à air comprimé (9).

4. Accumulateur selon l'une quelconque des revendications 2 à 3,
**caractérisé en ce que** le piston à air comprimé (9) est soumis à une force élastique.

5. Accumulateur selon la revendication 4,
**caractérisé en ce que** la somme de la force élastique régnant à l'extrémité de levée et de la force provoquée par l'air comprimé sur le piston à air comprimé (9) est supérieure à la force exercée par le milieu de traitement secondaire de gaz d'échappement sur le piston à milieu (3), et la force élastique est notamment ajustée de façon à ce que la zone de pression de travail du milieu de traitement secondaire de gaz d'échappement corresponde approximativement à la levée du piston à milieu (3).

6. Accumulateur selon l'une quelconque des revendications 2 à 5,
**caractérisé en ce que** le piston à milieu (3) est logé dans l'espace récepteur (2) prévu pour le milieu de traitement secondaire de gaz d'échappement qui est un espace de boîtier dont le diamètre est supérieur au diamètre extérieur de la partie du piston à milieu (3) reposant dans l'espace de boîtier et un espace annulaire (42) est de préférence formé entre la paroi (6) de l'espace de boîtier et le piston à milieu (3), ledit espace annulaire étant relié par voie de conduites au côté de milieu de traitement secondaire de gaz d'échappement lorsque l'accumulateur est en fonctionnement.

7. Accumulateur selon la revendication 6,
**caractérisé en ce que** le piston à milieu (3) présente au moins un alésage (40) qui débouche dans la surface de piston (39, 45, 46) et dans la surface latérale (41) dans la zone de l'espace annulaire (42).

8. Accumulateur selon la revendication 6 ou 7,
**caractérisé en ce que** l'espace annulaire (42) est relié par voie liquide avec l'espace récepteur (43) prévu pour le milieu de traitement secondaire de gaz d'échappement.

9. Accumulateur selon l'une quelconque des revendications 1 à 8,
**caractérisé en ce que** le raccord (44) est prévu dans un couvercle de boîtier (22).

10. Accumulateur selon la revendication 9,
**caractérisé en ce que** le couvercle de boîtier (22) présente une saillie (28) dans laquelle le piston à air comprimé (9) fait saillie et la saillie (28) est notamment configurée de manière à ce qu'au moins un ressort de compression (11) soit logé dans la saillie (28), ledit ressort de compression faisant saillie en partie dans le piston à air comprimé (9).

11. Accumulateur selon la revendication 10,
**caractérisé en ce que** le diamètre intérieur de la saillie (28) est supérieur au diamètre extérieur de la partie du piston à air comprimé (9) se trouvant dans la saillie (28) .

12. Accumulateur selon l'une quelconque des revendications 1 à 11,
**caractérisé en ce que** le raccord (44) est raccordé à un détendeur de pression faisant partie du dispositif de traitement secondaire de gaz d'échappement.
